# EUROPEAN PATENT APPLICATION

(11) **EP 4 647 140 A1**
(43) Date of publication of application: **12.11.2025**
(21) Application number: 24174698.1
(22) Date of filing: 08.05.2024
(51) Int. Cl.: B01D 29/23, B01D 35/02, B01D 35/30

(54) **FILTER SYSTEM FOR FILTERING FLUIDS AND FILTER ELEMENT FOR A FILTER SYSTEM**

(71) Applicant: MANN+HUMMEL GmbH, 71636 Ludwigsburg (DE)
(72) Inventor: WILDERMUTH, Andreas, 71636 Ludwigsburg (DE)
(74) Representative: Mann + Hummel Intellectual Property

(57) **Abstract**

A filter system (100) for filtering fluids, in particular a liquid fluid filter system, includes a housing (110) comprising a longitudinal segment (111) having a first opening (102), and a branching segment (113) having at least one second opening (104) for fluid passage, the housing (110) extending in an axial direction (80), and the first opening (102) and the at least second opening (104) being separated along the axial direction (80). The filter system (100) further comprises a filter element (10) comprising a filter body (12) configured to protrude into the housing (110) through the first opening (102) and to filter a fluid flow (50) between the first opening (102) and the at least second opening (104).

## Description

### Technical Field

The invention relates to a filter system for filtering fluids, in particular a liquid fluid filter system, as well as a filter element for a filter system.

### Background Art

For fuel cell cooling loops a particle filter is needed to protect the fuel cell stack from being damaged by particles. Strainer filters with low pressure drop are used therefore. The filter elements are normally integrated into a housing and cannot be removed. If a service is necessary, the complete housing has to be replaced and renewed.

CN 209434310 U discloses an ion exchanger for removing ions in a liquid fluid, which comprises a cylindrical shell, wherein one axial end of the shell is fixedly connected with an inlet component, and the other axial end of the shell is fixedly connected with an outlet component. A filter element assembly is arranged in the shell, and the inlet component and the outlet component are symmetrically arranged.

KR 20230085600 A discloses an ion exchanger filter device for a fuel cell vehicle including a filter housing having a coolant inlet formed on the bottom and a coolant outlet formed on the top. An ion exchanger cartridge is mounted in a detachable structure inside the filter housing, having a coolant inlet formed in a portion corresponding to the coolant inlet, and a plurality of pressure protrusions protruding downward around the coolant inlet. A lower housing is mounted on the bottom of the filter housing to cover the coolant inlet and has an inlet port through which coolant is supplied from the outside. A sealing ball is mounted inside the lower housing to close the coolant inlet, and is pressed downward by the pressing protrusion to open the coolant inlet when the ion cartridge is mounted inside the filter housing.

### Summary

An object of the invention is to provide an improved filter system for filtering fluids, in particular a liquid fluid filter system.

A further object of the invention is to provide a filter element for such a filter system.

According to an aspect of the invention the object is achieved by a filter system for filtering fluids, in particular a liquid fluid filter system, the filter system comprising a housing comprising a longitudinal segment having a first opening, and a branching segment having at least one second opening for fluid passage, the housing extending in an axial direction, and the first opening and the at least second opening being separated along the axial direction. The filter system further comprises a filter element comprising a filter body configured to protrude into the housing through the first opening and to filter a fluid flow between the first opening and the at least second opening . The housing further comprises a connecting element in an inner wall of the housing and adjacent to the first opening, the connecting element being configured to cooperate with a counter-connecting element of the filter element so that the filter element is fastened to the housing. The housing further comprises a disassembly element configured to cooperate with a counter-disassembly element of the filter element, the disassembly element comprising a control surface configured to, when the filter element is rotated around the axial direction, drive away the filter element from being fastened to the housing.

According to a further aspect of the invention the further object is achieved by a filter element for the filter system, the filter element comprising the filter body configured to protrude into the housing through the first opening and to filter the fluid flow between the first opening and the at least second opening. The filter body comprises the counter-connecting element configured to cooperate with the connecting element of the housing so that the filter element is fastened to the housing. The filter body further comprises a counter-disassembly element configured to cooperate with the disassembly element of the housing, and to, when the filter element is rotated around the axial direction, be driven away from its fastening position in the housing.

Advantageous embodiments are described in the dependent claims, the description and the drawings.

The proposed filter system comprises a housing with a removable filter element, in particular a strainer filter. Favorably, the strainer filter may be replaced in case of a service. The filter element protrudes into the housing and is attached to the housing by a connecting element at the housing and a mating counter-connecting element at the filter body. The connecting element and the counter-connecting element can be configured, e.g., as a groove and a mating protrusion. To remove the filter element, it may be rotated about the longitudinal axis causing a special geometry combination of the counter-disassembly element at the bottom of the filter element and the disassembly element of the housing to push the filter element out of the housing. The filter element can be easily removed from the housing.

At the end of the filter element distal from the counter-connecting element a half round geometry is implemented as the counter-disassembly element. Likewise, in the housing a half round geometry as the disassembly element is implemented adjacent to the distal end of the filter element. By rotating the filter element about the longitudinal axis, the two surfaces get into contact at least partially and an acting force is generated due to the inclination of the two surfaces.

In order to rotate the filter element from outside, at least two inner ribs may be foreseen as a tooling means with which the filter element can be rotated about the longitudinal axis by hand or by another device.

As a result, an easy removal of the filter element from the housing is favorably enabled. Advantageously, it is not necessary to replace the whole filter system in case of service.

According to a favorable embodiment of the filter system, the housing may comprise a cylindrically-shaped interior. The filter body may be conically-shaped and comprise a first end having a diameter smaller than that of a second end. The filter element may be configured to be inserted with the first end, i.e. the distal end, in the axial direction through the first opening into the longitudinal segment of the housing. The first opening may be a central opening of the housing. Thus, the filter element can easily be inserted into the housing without any tooling to be used.

According to a favorable embodiment of the filter system, the disassembly element at least partly may further comprise a cylindrical shape that is oriented transverse to the axial direction and with a first radius. The the mating counter-disassembly element at least partly may comprise a cylindrical shape with a second radius. The second radius may be larger than the first radius. By using these geometrical interfaces between the housing and the filter element the filter element will be pushed out of the housing when rotating the filter element about the axial direction.

According to a favorable embodiment of the filter system, the filter body may comprise tooling means configured as axially extending ribs, for rotating the filter body around the axial direction. Advantageously, the filter element can be rotated without using additional tools. Replacing the filter element in case of service may favorably be enabled.

According to a favorable embodiment of the filter system, the connecting element may be configured as a circumferential groove in the inner wall of the housing. The counter-connecting element may be configured as an at least partly circumferential protrusion. The filter element may be fastened in the interior of the housing in a reliable manner, even under vibrations during operation in a vehicle.

According to a favorable embodiment of the filter system, the filter body at least partly may comprise a strainer being overmolded by the filter body. Such a strainer filter advantageously may be used for filtering a cooling fluid, in particular, for a fuel cell system. The strainer provides a robust and durable filter medium.

According to a favorable embodiment of the filter system, the housing further may comprise a positioning element configured to cooperate with a receptacle of the filter element, the positioning element being configured as an axial pin, and the receptacle being configured as a hole. Thus, the filter element can be positioned and fixed at its distal end in axial direction in the interior of the housing. Also, the filter element may reliably be rotated around the positioning element, thus the disassembly element cooperating along its control surface with the counter-disassembly element for easy removal of the filter element from the housing.

According to a favorable embodiment of the filter system, the filter element may further comprise axially extending guiding elements on an outer wall of the filter element, and configured to support the filter body at the inner wall of the housing. By the guiding elements, the filter body can be easily guided to the positioning element when inserted into the housing which allows for reliable mounting and fixing of the filter element in the interior of the housing. The outer structure may be realized as a support tube carrying the filter medium, e.g. a strainer.

The proposed filter element, in particular a strainer filter, may be used in a filter system as a removable filter element. Thus, the strainer filter may easily be replaced in case of a service instead of replacing the filter system. The filter element protrudes inside the housing of the filter system and is fixed by a connecting element at the housing and a mating counter-connecting element at the filter body. The connecting element and the counter-connecting element can be configured, e.g., as a groove and a mating protrusion. To remove the filter element, it may be rotated about the longitudinal axis causing a special geometry combination as the counter-disassembly element at the bottom of the filter element and of the disassembly element of the housing to push the filter element out of the housing, so that it can easily be removed from the housing.

At the distal end of the filter element a half round geometry is implemented as the counter-disassembly element.

In order to rotate the filter element from outside, at least two inner ribs may be foreseen as a tooling means with which the filter element can be rotated by hand or by another device.

Easy removal of the filter element from the housing of the filter system is favorably enabled. Advantageously, it is not necessary to replace the whole filter system in case of service.

According to a favorable embodiment of the filter element, the filter body may be conically-shaped and further comprise a first end having a diameter smaller than that of a second end. Thus, the filter element can easily be inserted into the housing without any tooling to be used.

According to a favorable embodiment of the filter element, the counter-disassembly element may at least partly have a cylindrical shape that is oriented transverse to the axial direction. Favorably the counter-disassembly element may be implemented with a second radius being larger than a first radius of the disassembly element of the housing. By using these geometrical interfaces between the housing and the filter element the filter element will be pushed out of the housing when rotating the filter element along the axial direction against the housing.

According to a favorable embodiment of the filter element, the filter body may further comprise tooling means configured as axially extending ribs for rotating the filter body around the axial direction. Advantageously, the filter element can be rotated without using additional tools. Replacing the filter element in case of service may favorably be enabled.

According to a favorable embodiment of the filter element, the counter-connecting element may be configured as an at least partly circumferential protrusion. The filter element may be fastened in the interior of the housing in a reliable manner, even under vibrations during operation in a vehicle.

Alternatively or additionally, the filter body may further comprise a receptacle configured to cooperate with a positioning element of the housing, the receptacle being configured as a hole. Thus, the filter element can be positioned and fixed at one end in axial direction in the interior of the housing. Also, the filter element may reliably be rotated in the positioning element, thus the disassembly element cooperating along its control surface with the counter-disassembly element for easy removing of the filter element from the housing.

According to a favorable embodiment of the filter element, the filter body at least partly may further comprise a strainer being overmolded by the filter body. Such a strainer filter advantageously may be used for filtering a cooling fluid, in particular, for a fuel cell system. The strainer may be used as a robust filter medium.

According to a favorable embodiment of the filter element, the filter body may further comprise axially extending guiding elements on an outer wall of the filter body configured to support the filter body at the inner wall of the housing. By the guiding elements, the filter body is directed during inserting into the housing to the positioning element for reliable mounting and fixing of the filter element in the interior of the housing.

### Brief Description of Drawings

The present invention together with the above-mentioned and other objects and advantages may best be understood from the following detailed description of the embodiments, but not restricted to the embodiments.
Figure 1 is an exploded view of a filter system for filtering fluids, in particular a liquid fluid filter system, according to an embodiment of the invention.
Figure 2 is the filter element of the filter system according to Fig. 1.
Figure 3 is a sectional view of the filter system according to Fig. 1.
Figure 4 is a detailed sectional view of the filter system according to Fig. 1 highlighting the disassembly element.
Figure 5 is a detailed sectional view of the filter system according to Fig. 1 highlighting the connecting element.

### Description of Embodiments

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

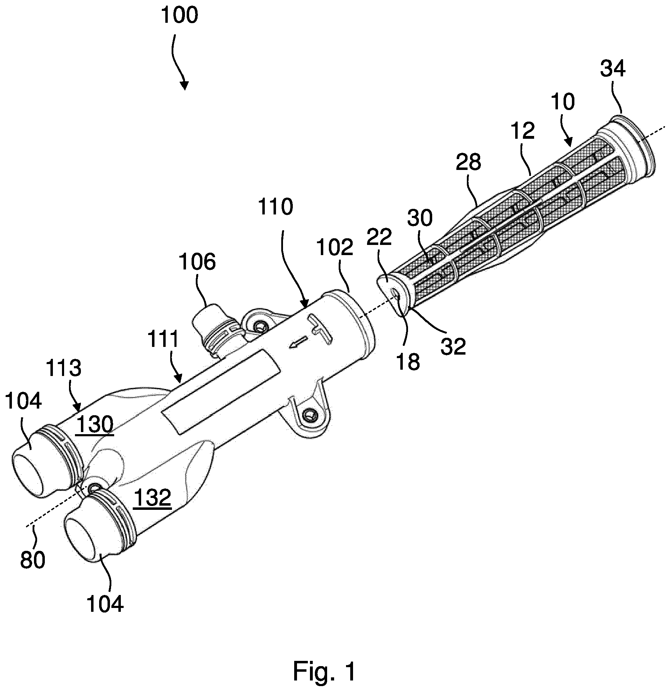

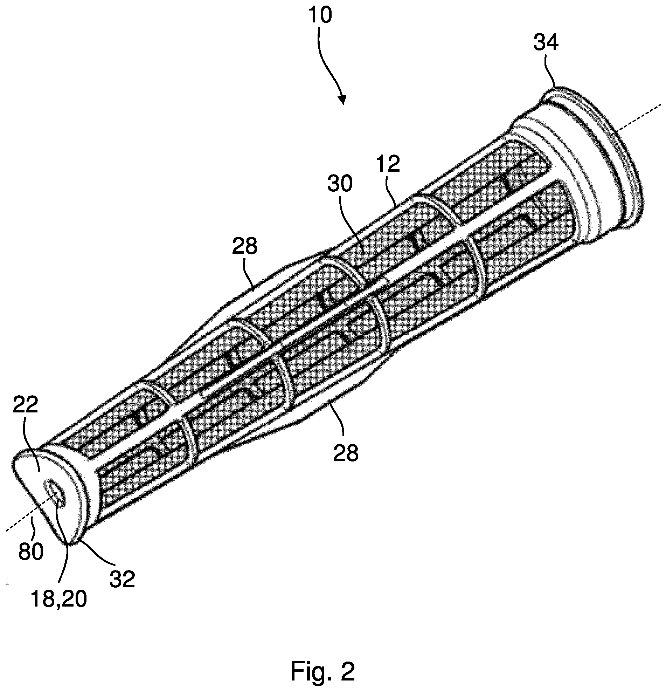

Figure 1 depicts an exploded view of a filter system 100 for filtering fluids, in particular a liquid fluid filter system, according to an embodiment of the invention. In Figure 2 the filter element 10 of the filter system 100 is depicted.

The filter system 100 comprises a housing 110 comprising a first segment 111 configured as a longitudinal segment 111 providing a first opening 102 as a central opening 102 and a second segment 113, configured as a branching segment 113, providing two second openings 104 with a first leg 130 and a second leg 132 for fluid passage. The first opening 102 may favorably be the fluid inlet and the two second openings 104 may be the fluid outlet.

In an alternative embodiment, the second openings 104 could be the fluid inlet and the first opening 102 may be the fluid outlet.

The housing 110 has an extension in an axial direction 80. The first opening 102 and the two second openings 104 are separated along the axial direction 80.

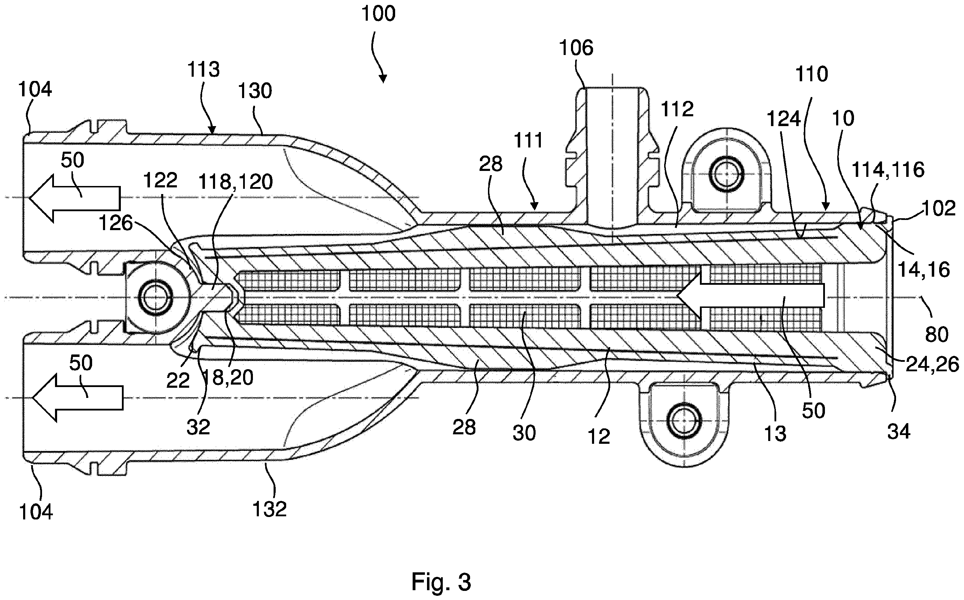

The housing 110 has a cylindrically-shaped interior 112 (see Figure 3) comprising the first opening 102, wherein the filter element 10 has a conically-shaped filter body 12 with a first end 32 having a smaller diameter than a second end 34. Thus, the filter element 10 is inserted with the first end 32 in axial direction 80 into the longitudinal segment 111. Easy mounting of the filter element 10 into the housing 110 is facilitated.

The filter element 10 with a filter body 12 is operatively accommodated in the housing 110 through the first opening 102 and is configured for a fluid flow 50 between the first opening 102 and the two second openings 104 passing through the filter body 12.

The filter body 12 at least partly comprises a strainer 30. Favorably, the strainer 30 may be overmolded by the filter body 12. The filter body 12 serves as a kind of support tube for the strainer 30.

In this embodiment, the longitudinal section 111 further provides a third opening 106 where the filtered fluid may also be branched off for use in further components, e.g. power electronics of a fuel cell system. Optionally, the third opening 106 may be omitted.

For more details to be seen, Figure 3 depicts a sectional view of the filter system 100.

The fluid flow 50 is marked by arrows. The fluid enters the filter system through the first opening 102 and flows through the interior of the filter body 12 of the filter element 10. The fluid is filtered by passing through the strainer 30 and leaves the filter element 10. The filtered fluid flows in the interior 112 of the housing 110 between the inner wall 124 and the filter element to the two second openings 104 of the first leg 130 and the second leg 132. A smaller part of the filtered fluid may exit the housing 110 through the third opening 106.

The housing 110 provides a connecting element 114 on an inner wall 124 adjacent to the first opening 102 for cooperating with a counter-connecting element 14 arranged at the filter element 10 for fastening the filter element 10 in the housing 110 when the filter element 10 is inserted into the housing 110.

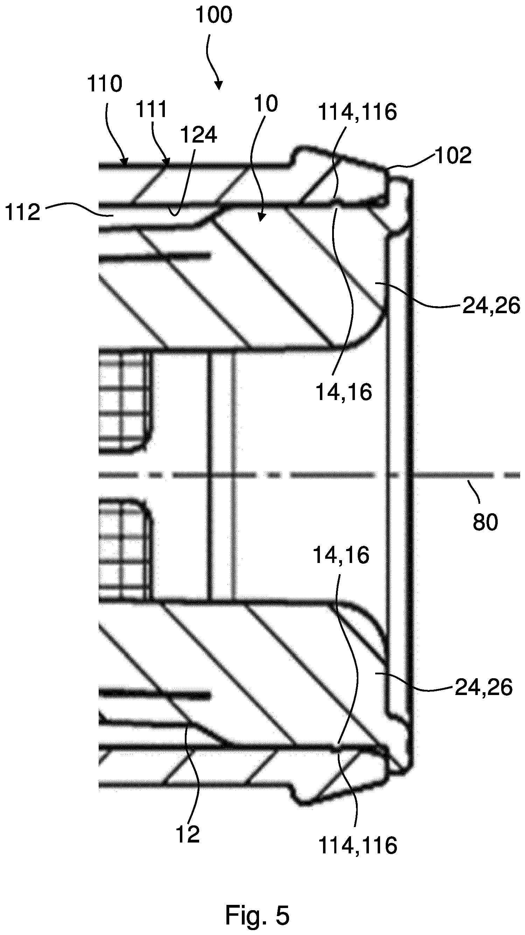

The connecting element 114 may be configured as a circumferential groove 116 on the inner wall 124 of the housing 110 and the counter-connecting element 14 may be configured as an at least partly circumferential protrusion 16. Details are depicted in Figure 5.

Of course, the groove 116 and the protrusion 16 may also be exchanged, thus that the groove 116 is arranged in the filter body 12 and the protrusion 16 is arranged on the inner wall 124 of the housing 110.

The housing 110 further provides a disassembly element 122 for cooperating with a counter-disassembly element 22 of the filter element 10. The disassembly element 122 provides a control surface 126 in such a way that by rotating the filter element 10 around the axial direction 80 the filter element 10 is positively driven away from its fastening position in the housing 110.

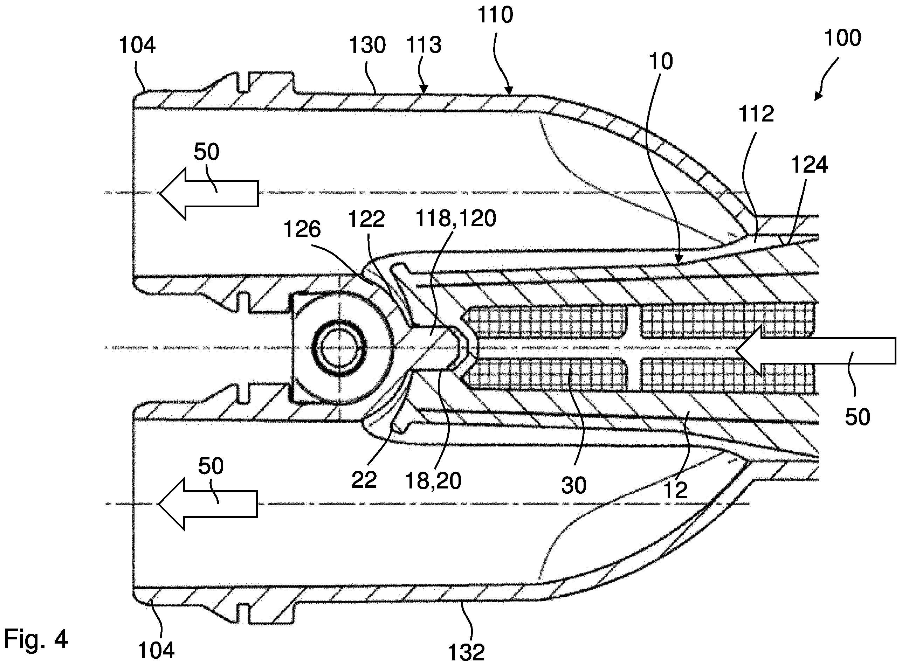

The disassembly element 122 at least partly comprises a cylindrical shape that is arranged transverse to the axial direction 80 with a first radius and the counter-disassembly element 22 at least partly comprises a cylindrical shape with a second radius. In particular, the second radius may be larger than the first radius. Details are depicted in Figure 4.

By using these geometrical interfaces between the housing 110 and the filter element 10 the filter element 10 will be pushed out of the housing 110 when rotating the filter element 10 along the axial direction 80 against the housing 110.

For this purpose, the filter body 12 comprises tooling means 24, in particular, configured as axially extending ribs 26, for rotating the filter body 12 around the axial direction 80. Advantageously, the filter element 10 can be rotated without using additional tools. Replacing the filter element 10 in case of service may favorably be enabled.

The housing 110 further provides a positioning element 118 for cooperating with a receptacle 18 of the filter element 10. The positioning element 118 is implemented as an axial pin 120 and the receptacle 18 is implemented as a hole 20.

Of course, other geometrical shapes may be used for positioning the filter element 10 inside the interior 112 of the housing 110.

The filter element 10 further comprises axially extending guiding elements 28 on an outer wall 13 of the filter element 10. By the guiding elements 28 the filter body 12 is supported at the inner wall 124 of the housing 110. Further, the guiding elements 28 are favorable for inserting the filter element 10 into the housing 110.

In Figure 4 a detailed sectional view of the filter system 100 is depicted, highlighting the disassembly element 122.

In particular, the control surface 126 of the disassembly element 122 of the housing 110 is to be seen, as well as the shape of the counter-disassembly element 22 of the filter element 10. The radius of the half round shape of the counter-disassembly element 22 is larger than the radius of the half round shape of the disassembly element 122.

The pin 120 as a positioning element 118 of the housing 110 cooperates with the hole 20 as the counter-positioning element 18 of the filter element 10 and is inserted into the hole 20. Thus, the filter element 10 may reliably be positioned in axial direction 80 as well as transverse to the axial direction 80.

In Figure 5 a detailed sectional view of the filter system 100 is depicted, highlighting the connecting element 114 of the housing 110 cooperating with the counter-connecting element 14 of the filter element 10. The connecting element 114 is realized as a groove 116, whereas the counter-connecting element 14 is realized as a protrusion 16 intervening into the groove 116. Thus, the filter element 10 is reliably fastened by snapping the protrusion 16 into the groove 116 when the filter element 10 is inserted into the housing 110.

### Reference Signs List

- 10: filter element
- 12: filter body
- 13: outer wall
- 14: counter-connecting element
- 16: protrusion
- 18: receptacle
- 20: hole
- 22: counter-disassembly element
- 24: tooling means
- 26: rib
- 28: guiding element
- 30: strainer
- 32: first end
- 34: second end
- 50: fluid flow
- 80: axial direction
- 100: filter system
- 102: first opening
- 104: second opening
- 106: third opening
- 110: housing
- 111: longitudinal segment
- 112: interior
- 113: branching segment
- 114: connecting element
- 116: groove
- 118: positioning element
- 120: pin
- 122: disassembly element
- 124: inner wall
- 126: control surface
- 130: leg
- 132: leg

## Claims

1. A filter system (100) for filtering fluids, in particular a liquid fluid filter system, the filter system (100) comprising
a housing (110) comprising a longitudinal segment (111) having a first opening (102), and a branching segment (113) having at least one second opening (104) for fluid passage, the housing (110) extending in an axial direction (80), and the first opening (102) and the at least second opening (104) being separated along the axial direction (80);
a filter element (10) comprising a filter body (12) configured to protrude into the housing (110) through the first opening (102) and to filter a fluid flow (50) between the first opening (102) and the at least second opening (104),
wherein the housing (110) further comprises a connecting element (114) in an inner wall (124) of the housing (110) and adjacent to the first opening (102), the connecting element (114) being configured to cooperate with a counter-connecting element (14) of the filter element (10) so that the filter element (10) is fastened to the housing (110), and
the housing (110) further comprises a disassembly element (122) configured to cooperate with a counter-disassembly element (22) of the filter element (10), the disassembly element (122) comprising a control surface (126) configured to, when the filter element (10) is rotated around the axial direction (80), drive away the filter element (10) from being fastened to the housing (110).

2. The filter system to claim 1, wherein the housing (110) further comprises a cylindrically-shaped interior (112),
the filter body (12) is conically-shaped and comprises a first end (32) having a diameter smaller than that of a second end (34), and
the filter element (10) is configured to be inserted with the first end (32) in the axial direction (80) through the first opening (102) into the longitudinal segment (111).

3. The filter system according to claim 1 or 2, wherein the disassembly element (122) at least partly further comprises a cylindrical shape oriented transverse to the axial direction (80) and with a first radius,
the counter-disassembly element (22) at least partly comprises a cylindrical shape with a second radius, and
the second radius is larger than the first radius.

4. The filter system according to any one of the preceding claims, wherein the filter body (12) comprises tooling means (24) configured as axially extending ribs (26) for rotating the filter body (12) around the axial direction (80).

5. The filter system according to any one of the preceding claims, wherein the connecting element (114) is configured as a circumferential groove (116) in the inner wall (124) of the housing (110), and
the counter-connecting element (14) is configured as an at least partly circumferential protrusion (16).

6. The filter system according to any one of the preceding claims, wherein the filter body (12) at least partly comprises a strainer (30) being overmolded by the filter body (12).

7. The filter system to any one of the preceding claims, wherein the housing (110) further comprises a positioning element (118) configured to cooperate with a receptacle (18) of the filter element (10), the positioning element (118) being configured as an axial pin (120), and the receptacle (18) being configured as a hole (20).

8. The filter system according to any one of the preceding claims, wherein the filter element (10) further comprises axially extending guiding elements (28) on an outer wall (13) of the filter element (10) and configured to support the filter body (12) at the inner wall (124) of the housing (110).

9. A filter element (10) for the filter system (100) according to claim 1, the filter element (10) comprising:
the filter body (12) configured to protrude into the housing (110) through the first opening (102) and to filter the fluid flow (50) between the first opening (102) and the at least second opening (104),
wherein the filter body (12) comprises the counter-connecting element (14) configured to cooperate with the connecting element (114) of the housing (110) so that the filter element (10) is fastened to the housing (110),
the filter body (12) further comprises a counter-disassembly element (22) configured to cooperate with the disassembly element (122) of the housing (110), and to, when the filter element (10) is rotated around the axial direction (80), be driven away from being fastened to the housing (110).

10. The filter element according to claim 9, wherein the filter body (12) is conically-shaped and further comprises a first end (32) having a diameter smaller than that of a second end (34).

11. The filter element according to claim 9 or 10, wherein the counter-disassembly element (22) at least partly comprises a cylindrical shape oriented transverse to the axial direction (80).

12. The filter element according to any one of the claims 9 to 11, wherein the filter body (12) further comprises tooling means (24) configured as axially extending ribs (26) for rotating the filter body (12) around the axial direction (80).

13. The filter element according to any one of the claims 9 to 12, wherein the counter-connecting element (14) is configured as an at least partly circumferential protrusion (16), and
the filter body (12) further comprises a receptacle (18) configured to cooperate with a positioning element (118) of the housing (110), the receptacle (18) being configured as a hole (20).

14. The filter element according to any one of the claims 9 to 13, wherein the filter body (12) at least partly further comprises a strainer (30) being overmolded by the filter body (12).

15. The filter element according to any one of the claims 9 to 14, wherein the filter body (12) further comprises axially extending guiding elements (28) on an outer wall (13) of the filter body (12) configured to support the filter body (12) at the inner wall (124) of the housing (110).
